# EUROPÄISCHE PATENTSCHRIFT

(11) **EP 0 922 380 B1**
(45) Veröffentlichungstag und Bekanntmachung des Hinweises auf die Patenterteilung: **09.04.2008**
(21) Anmeldenummer: 98122910.7
(22) Anmeldetag: 02.12.1998
(51) Int. Cl.: A01B 59/043, A01B 59/04, A01B 51/02

(54) **Landwirtschaftliches Zugfahrzeug sowie Vorrichtung zum Ankuppeln von Anhängern an landwirtschaftliche Zugfahrzeuge**
Agiculural towing vehicle, and device for connecting trailers to agricultural towing vehicles
Véhicule de traction agricole, et dispositif d'accouplement de remorques à des véhicules de traction agricoles

(30) Priorität: 12.12.1997 DE 19755262
(43) Veröffentlichungstag der Anmeldung: 16.06.1999
(73) Patentinhaber: CLAAS Selbstfahrende Erntemaschinen GmbH, 33428 Harsewinkel (DE)
(72) Erfinder: Kleinemenke, Heinrich, 33428 Harsewinkel (DE); Pickert, Heinrich, 33397 Rietberg (DE)

(56) Entgegenhaltungen:
- AT-B- 380 846
- DE-A- 3 523 742
- DE-A- 4 217 249
- GB-A- 957 544
- GB-A- 2 116 924
- US-A- 3 124 372
- US-A- 4 047 733
- US-A- 4 082 157
- US-A- 5 067 741
- DATABASE WPI Section PQ, Week 9413 Derwent Publications Ltd., London, GB; Class P12, AN 94-108027 XP002097758 & SU 1 792 247 A (BELOSHAPKIN K P), 30. Januar 1993 (1993-01-30)

## Beschreibung

Die Erfindung bezieht sich auf ein landwirtschaftliches Zugfahrzeug, das heck- und/oder frontseitig mit einer aus Unter- und Oberlenkern bestehenden Dreipunkt-Hydraulik ausgestattet ist.

Üblicherweise werden heute für landwirtschaftliche Transportarbeiten Traktoren eingesetzt, die mit einer separaten Anhängekupplung zum Ziehen von Anhängern ausgestattet sind (siehe z.B. DE-A-4217249). Zur Erledigung der Transportarbeiten werden ein oder mehrere Anhänger an den Trakor angekuppelt, die Anhänger werden beladen, der Traktor zieht die beladenen Anhänger an den Bestimmungsort der Ladung, wo sie entladen werden, und bringt die Anhänger dann wieder zurück. Als Anhänger werden Mehrachsanhänger eingesetzt, die über ein Zugmaul mit dem Traktor verbunden sind. Bisher ist es nicht bekannt, Sattelauflieger von landwirtschaftlichen Zugfahrzeugen ziehen zu lassen. Bei diesem System für Transporte hat sich als nachteilig erwiesen, daß jeweils für die vollen Transportwege ein Traktor blockiert wird, der zudem nicht besonders schnell fahren kann. Für einen schnelleren Transport mittels LKW muß entweder das Ladegut überladen werden auf den LKW, oder die Zugmaschine des LKW bleibt leer, um einen vollen Traktor-Anhänger ankuppeln und ziehen zu können. Damit sind die heute bekannten Lösungen für landwirtschaftliche Transportarbeiten uneffektiv. Außerdem ist es mit den bekannten Systemen nur mit Überladen der landwirtschaftlichen Ladung möglich, die heute für sonstige Transportaufgaben mittels LKW übliche Infrastruktur von Sattenzugmaschinen, die Sattelauflieger-Anhänger ziehen, zu nutzen.

Demgemäß ist es die Aufgabe der vorliegenden Erfindung, ein landwirtschaftliches Zugfahrzeug auf einfache Weise so auszubilden, daß es für landwirtschaftliche Transportarbeiten einen an sich bekannten Sattelauflieger einsetzen kann.

Die Aufgabe wird, wie beansprucht, gelöst indem das Fahrzeug über eine Dreipunkthydraulik mit einem Tragrahmen in Eingriff gebracht ist, der sich einends unmittelbar und/oder mittelbar am Fahrzeugrahmen abstützt und anderenends Mittel zur Aufnahme der Kuppelelemente eines an sich bekannten Sattelaufliegers aufweist. Weitere Ausgestaltungen und Varianten sind dem Wortlaut der jeweiligen Unteransprüche zu entnehmen, auf die verwiesen wird.

Durch die erfindungsgemäße Lösung ist es möglich, mit einem landwirtschaftlichen Zugfahrzeug, das heck- und/oder frontseitig mit einer Dreipunkt-Hydraulik ausgestattet ist, herkömmliche Sattelauflieger zu ziehen. Durch die Lösung können herkömmliche Sattelauflieger von einem landwirtschaftlichen Zugfahrzeug auf dem Feld gezogen werden, beispielsweise um Erntegut von einem Erntefahrzeug wie einem Mähdrescher oder Feldhäcksler zu übernehmen, um dann für den Straßentransport am Feldrand vom landwirtschaftlichen Zugfahrzeug abgekuppelt und an einen herkömmlichen LKW-Sattelschlepper angekuppelt zu werden. Auf diese Weise kann das landwirtschaftliche Zugfahrzeug voll für die landwirtschaftlichen Zwecke genutzt werden und ist von Transportarbeiten entlastet, für die es gar nicht speziell gebaut wurde, und der Systemwechsel vom landwirtschaftlichen Transport zum Straßentransport ist auf einfache Weise möglich, ohne daß ein Umladen der Ladung erforderlich wäre.

Anhand der schematisch gehaltenen Zeichnungen sei die Erfindung beispielhaft erläutert. Es zeigen:
- Figur 1: ein Fahrzeuggespann bestehend aus einem landwirtschaftlichen Zugfahrzeug mit gekuppeltem Sattelauflieger in Seitenansicht,
- Figur 2: eine Teildraufsicht nach dem Ausschnitt A in Figur 1,

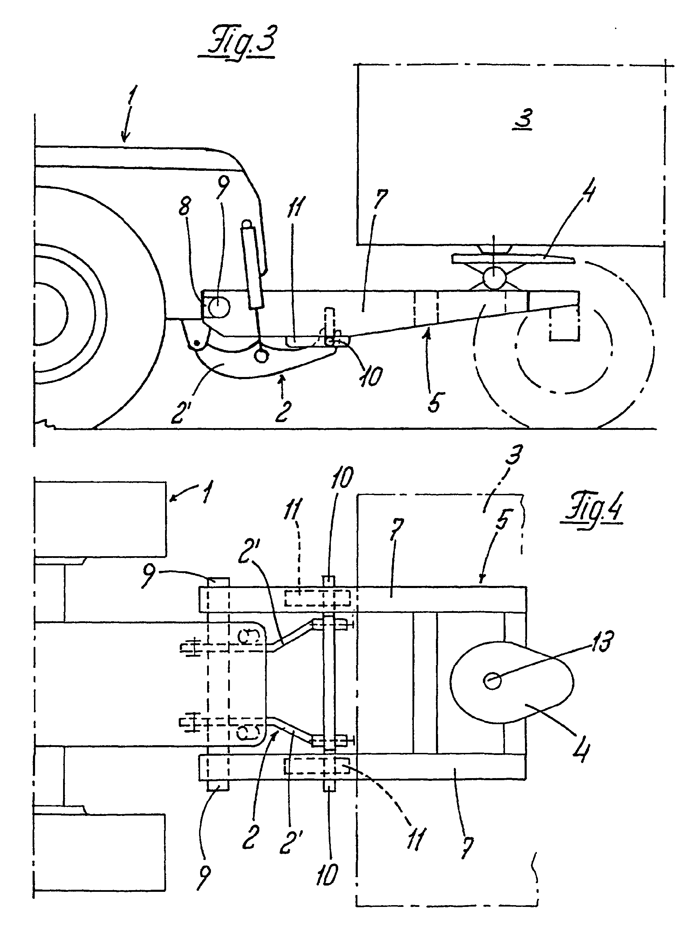

- Figur 3: eine Teilseitenansicht eines Fahrzeuggespannes im Sinne der Figur 1 mit abgewandelt gestalteter Kupplung,
- Figur 4: eine Teildraufsicht entsprechend Figur 3,

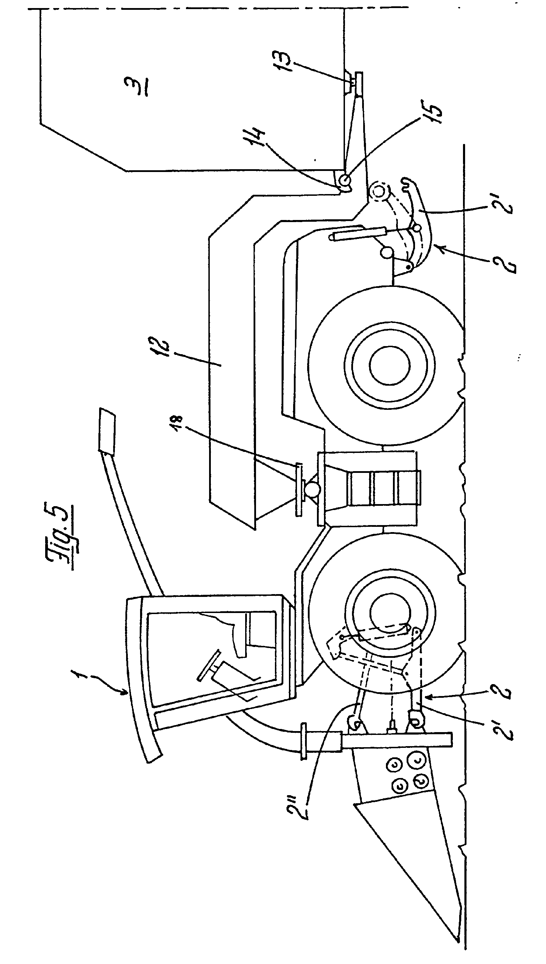

- Figur 5: eine weitere Variante des Fahrzeuggespannes in Seitenansicht,
- Figur 6: eine Teildraufsicht entsprechend Figur 5 und
- Figur 7: die Seitenansicht einer weiteren Ausführungsform der Gespannkupplung.

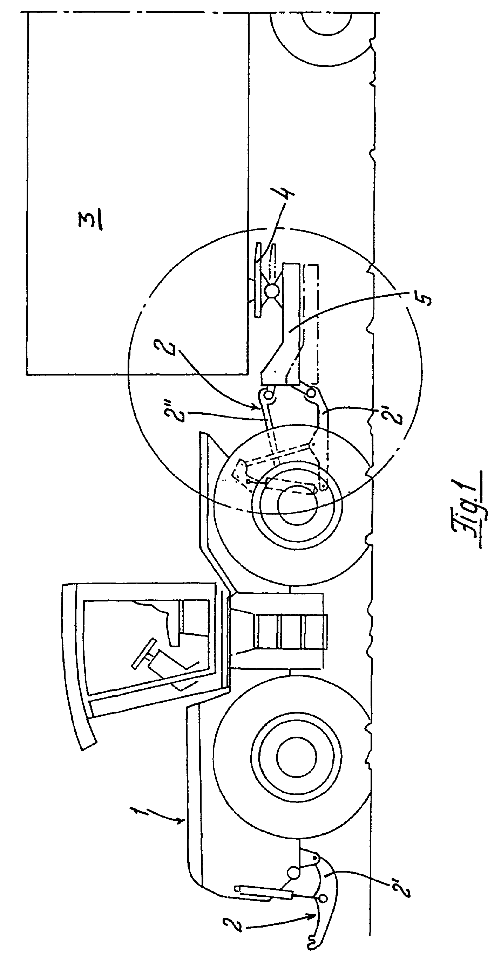

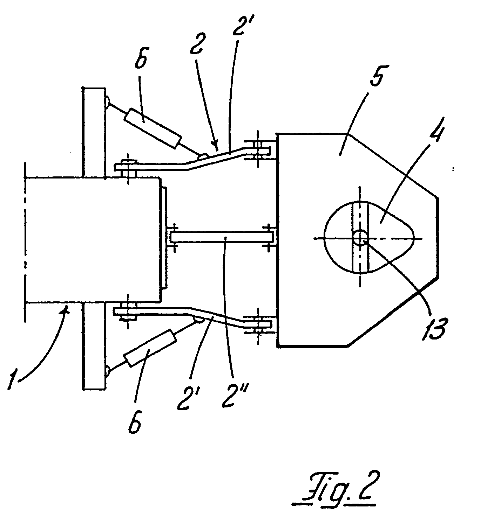

Mit 1 ist in Figur 1 ein landwirtschaftliches Zugfahrzeug, beispielsweise in Gestalt eines Mehrzweckfahrzeuges, bezeichnet, dessen Fahrerkabine in verschiedene Positionen umsetzbar ist. Anstelle eines Mehrzweckfahrzeuges kann jedoch auch ein herkömmlicher Traktor oder auch eine selbstfahrende landwirtschaftliche Arbeitsmaschine eingesetzt werden. Das Fahrzeug 1 ist heck- und frontseitig mit je einer Dreipunkt-Hydraulik 2 zum Einhängen von Arbeitsgeräten ausgestattet. Die beiden zugehörigen Unterlenker tragen das Bezugszeichen 2', der Oberlenker die Bezugsziffer 2''. Mit 3 ist ein Sattelauflieger bezeichnet, dessen achsloses Ende mit einer Sattelkupplung 4 über zugehörige Verbindungsglieder kraftschlüssig verbindbar ist. Nach den Figuren 1 und 2 ist die Sattelkupplung 4 Bestandteil eines Tragrahmens 5, der in die Unter- und Oberlenker 2', 2'' der Dreipunkt-Hydraulik 2 einhängbar ist. Durch die bewegliche Dreipunkthydraulik kann der Tragrahmen 5 auf einfache Art und Weise vom Boden aufgenommen und am Fahrzeug 1 befestigt werden. Die Befestigung des Tragrahmens 5 am Zugfahrzeug 1 kann mittelbar beispielsweise über die Dreipunkthydraulik oder auch unmittelbar über geeignete Befestigungsmittel am Fahrzuegrahmen des Zugfahrzeugs 1 erfolgen. Weiter kann die Dreipunkthydraulik dazu genutzt werden, den Tragrahmen 5 mit dem Sattelauflieger 3 zu verbinden. Zur Verhinderung einer relativen Seitenbewegung des Tragrahmens 5 gegenüber dem Zugfahrzeug 1 sind zusätzlich Stabilisatoren 6, beispielsweise in Form von Kolben-Zylindereinheiten, zum seitlichen Verbinden von Fahrzeugrahmen und Aufhängung des Tragrahmens 5 vorgesehen. Die Aufnahme oder Abgabe des Sattelaufliegers 3 erfolgt durch Anheben oder Absenken der Lenker 2', 2'' der Dreipunkt-Hydraulik 2. Eine (nicht dargestellte) bekannte Stütze trägt den Auflieger 3 im ausgekuppelten Zustand.

Bei der erfindungsgemäßen Ausführung nach den Zeichnungsfiguren 3 und 4 besteht der Tragrahmen 5 aus zwei beabstandet zueinander angeordneten und miteinander verbundenen Holmen 7, die einendig über stirnseitige Ausnehmungen 8 in eine Aufnahmebefestigung, im Ausführungsbeispiel eine - im Fahrzeugrahmen gelagerte Quertraverse 9 einschiebbar sind. Eine in den Unterlenkern 2' der Dreipunkt-Hydraulik gehaltene zweite Aufnahmebefestigung in Form einer Quertraverse 10 läßt sich beim Anheben der Unterlenker in Schlitzführungen 11 der Holme 7 einfahren und fängt so in gekuppeltem Zustand das Aufliegergewicht ab. Die beiden Holme 7 sind zwar in gekoppelten Zustand radial um die fahrzeugseitige Quertraverse 9 beweglich (für den Kuppelvorgang), sie lassen jedoch keine Seitenbewegung gegenüber dem Zugfahrzeug zu

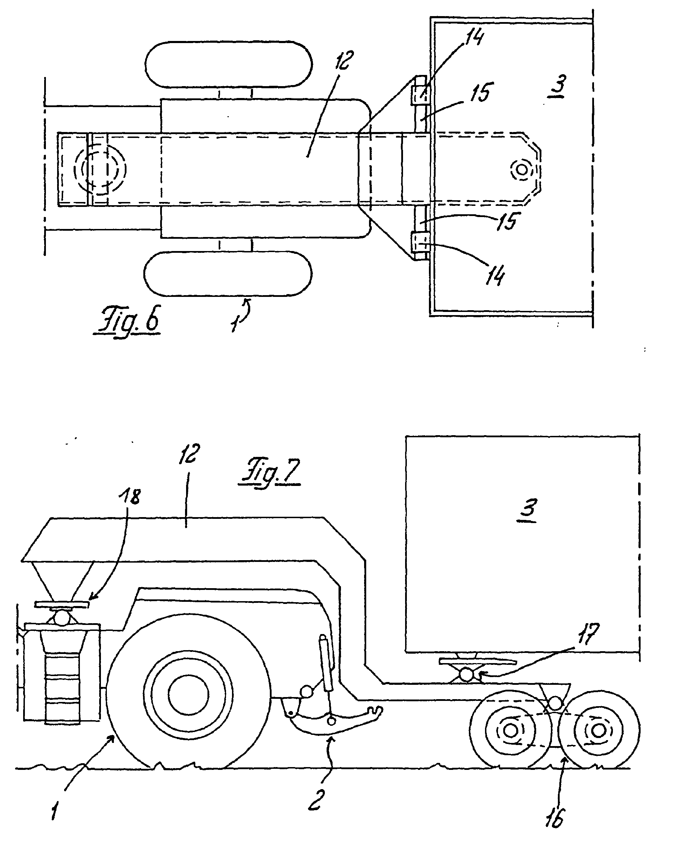

Die Zeichnungsfiguren 5 und 6 lassen einen als Kastenprofil ausgebildeten gekröpften Tragrahmen 12, nicht gemäß der Erfindung, erkennen, der einendig mit dem achslosen Ende eines Sattelaufliegers 3 über einen Königszapfen 13, Einhängebügel 14 und Rahmenseitentraversen 15 starr verbindbar ist. Anstelle einer starren Verbindung ist auch eine aktiv gesteuerte oder passiv bewegliche Verbindung realisierbar, beispielsweise, um die Wendigkeit des Gespanns zu erhöhen. Mit dem fahrzeugseitigen Ende stützt sich der Tragrahmen 12 kraftschlüssig und beweglich auf einem etwa in der Mitte des Zugfahrzeuges 1 angeordneten Verbindungskupplung 18 ab. In bevorzugter Ausgestaltung befindet sich die Verbindungskupplung 18 auf der Längsmittelachse des Zugfahrzeugs, da ansonsten das Lenken des Zugfahrzeugs erschwert wäre. Durch die mittige Anordnung der Verbindungskupplung 18 zwischen zwei Achsen des Zugfahrzeugs wird eine einseitige Gewichtsbelastung des Zugfahrzeuges vermieden. Auch hier werden die Unterlenker 2' der vorhandenen Dreipunkthydraulik, dazu eingesetzt, die Aufnahme oder Abgabe des Sattelaufliegers 3 zu bewerkstelligen. Nach Figur 7 ist ein gekröpfter Profil-Tragrahmen 12, nicht gemäß der Erfindung, vorgesehen, dem zum Abfangen des Sattelaufliegergewichtes aufliegerseitig ein Radsatz 16 zugeordnet ist. Solche zusätzlichen Radsätze können insbesondere dann eingesetzt werden, wenn in weichen Bodenverhältnissen gearbeitet werden muß und die Räder des Sattelaufliegers 3 einzusinken drohen, oder wenn eine stärkere Bodenverdichtung unerwünscht ist. Zur Traktionsverbesserung können die zusätzlichen Radsätze 16 mit Antriebsmitteln wie beispielsweise Radnabenmotoren versehen sein. Der Rahmen 12 stützt sich wie beim vorhergehenden Ausführungsbeispiel etwa in der Mitte des Zugfahrzeuges 1 kraftschlüssig und beweglich auf eine Sattelkupplung 4 ab. Zur Aufnahme des Sattelaufliegers 3 ist anderenends ein zweiter Sattelkupplung 17 vorgesehen. Durch Betätigen der Unterlenker 2' kann der Rahmen 12 aus dem Verbindungskupplung 18 ausgehoben werden.

### Bezugszeichenliste

- 1 -: Zugfahrzeug
- 2 -: Dreipunkt-Hydraulik
- 2' -: Unterlenker
- 2'' -: Oberlenker
- 3 -: Sattelauflieger
- 4 -: Sattelkupplung
- 5 -: Tragrahmen
- 6 -: Stabilisatoren
- 7 -: Holme
- 8 -: Ausnehmungen in den Holmen 7
- 9 -: fahrzeugseitige Quertraverse
- 10 -: Quertraverse in Unterlenkern
- 11 -: Schlitzführungen in den Holmen 7
- 12 -: gekröpfter Tragrahmen
- 13 -: Königszapfen
- 14 -: Einhängebügel
- 15 -: Quertraversen
- 16 -: Radsatz
- 17 -: zweite Sattelkupplung
- 18 -: Verbindungskupplung

## Patentansprüche

1. Landwirtschaftliches Zugfahrzeug, das heck- und/oder frontseitig mit einer aus Unter- und Oberlenkern bestehenden Dreipunkt-Hydraulik ausgestattet ist,
**dadurch gekennzeichnet,**
**dass** das Zugfahrzeug (1) über eine Dreipunkt-Hydraulik (2) mit einem Tragrahmen (5) in Eingriff **gebracht** ist, der sich einenends unmittelbar und/oder mittelbar am Fahrzeugrahmen abstützt und anderenends Mittel (4) zur Aufnahme der Kupplungselemente eines an sich bekannten Sattelaufliegers (3) aufweist und wobei der Tragrahmen (5) aus mindestens zwei beabstandet zueinander angeordneten und miteinander verbundenen Holmen (7) besteht, die einendig radial beweglich in eine einschiebbar fahrzeugseitig vorgesehene, eine Tragrahmenseitenbewegung ausschließende erste Aufnahmebefestigung (9) einschiebbar und in eine dazu beabstandet in den Unterlenkern (2') der Dreipunkthydraulik (2) gehaltene zweite Aufnahmebefestigung einhängbar sind.

2. Zugfahrzeug nach Anspruch 1,
**dadurch gekennzeichnet,**
**daß** der Tragrahmen (5) und/oder das Zugfahrzeug (1) Mittel (2', 2'', 10) zum Abfangen des Aufliegergewichtes aufweist.

3. Zugfahrzeug nach Anspruch 1 oder 2,
**dadurch gekennzeichnet,**
**daß** der Tragrahmen (5) Mittel für den Koppelvorgang mit dem Sattelauflieger (3) aufweist.

4. Zugfahrzeug nach einem oder mehreren der Ansprüche 1 bis 3,
**dadurch gekennzeichnet,**
**daß** der Tragrahmen (5) Mittel (6) zur Verhinderung einer Seitenbewegung gegenüber dem Zugfahrzeug (1) aufweist.

5. Zugfahrzeug nach einem oder mehreren der Ansprüche 1 bis 4,
**dadurch gekennzeichnet,**
**daß** der Tragrahmen (5) eine den Sattelauflieger (3) tragende Sattelkupplung (4) aufweist, wobei der Rahmen (5) in Unter- und Oberlenker (2', 2'') einer das Aufliegergewicht abfangenden Dreipunkt-Hydraulik (2) einhängbar ist

6. Zugfahrzeug nach einem oder mehreren der Ansprüche 1 bis 5,
**dadurch gekennzeichnet,**
**daß** dem sattelaufliegerseitigen Ende des Tragrahmens (5, 12) zumindest ein zusätzlicher Radsatz (16) zugeordnet ist.

## Claims

1. An agricultural tractor which is equipped at its tail and/or front with a three-point hydraulic mechanism comprising lower and upper links,
**characterised in that**
the tractor (1) is brought into engagement by way of a three-point hydraulic mechanism (2) with a carrier frame (5) which at one end is directly and/or indirectly supported on the vehicle chassis and which at the other end has means (4) for receiving the coupling elements of a per se known semitrailer (3) and wherein the carrier frame (5) comprises at least two frame members (7) which are arranged in mutually spaced relationship and which are connected together and which at one end can be radially movably inserted into a first mounting fixing (9) provided at the vehicle and excluding carrier frame lateral movement and can be hung in a second mounting fixing which is held in spaced relationship with the first mounting fixing in the lower links (2') of the three-point hydraulic mechanism (2).

2. A tractor according to claim 1 **characterised in that** the carrier frame (5) and/or the tractor (1) has means (2', 2", 10) for supporting the trailer weight.

3. A tractor according to claim 1 or claim 2 **characterised in that** the carrier frame (5) has means for the coupling operation to the semitrailer (3).

4. A tractor according to one or more of claims 1 to 3 **characterised in that** the carrier frame (5) has means (6) for preventing a lateral movement with respect to the tractor (1).

5. A tractor according to one or more of claims 1 to 4 **characterised in that** the carrier frame (5) has a fifth wheel coupling (4) carrying the semitrailer (3), wherein the frame (5) can be hung in lower and upper links (2', 2") of a three-point hydraulic mechanism (2) supporting the trailer weight.

6. A tractor according to one of claims 1 to 5 **characterised in that** at least one additional wheel set (16) is associated with the semitrailer end of the carrier frame (5, 12).

## Revendications

1. Véhicule tracteur agricole équipé côté arrière et/ou côté avant d'un système hydraulique trois points constitué de bras inférieurs et supérieurs, **caractérisé en ce que**, par l'intermédiaire d'un système hydraulique trois points (2), le véhicule tracteur (1) est amené en prise avec un bâti porteur (5) qui, à une extrémité, prend appui directement et/ou indirectement sur le châssis de véhicule et, à l'autre extrémité, comporte des moyens (4) pour recevoir les éléments d'accouplement d'une semi-remorque (3) connue en soi, et le bâti porteur (5) étant constitué d'au moins deux longerons (7) qui sont disposés à distance l'un de l'autre et reliés l'un à l'autre et qui, à une extrémité, peuvent être insérés avec une mobilité radiale dans une première fixation réceptrice (9), qui est prévue côté véhicule et s'oppose au déplacement latéral du bâti porteur, et être accrochés à une seconde fixation réceptrice disposée à distance de la précédente dans les bras inférieurs (2') du système hydraulique trois points (2).

2. Véhicule tracteur selon la revendication 1, **caractérisé en ce que** le bâti porteur (5) et/ou le véhicule tracteur (1) comportent des moyens (2', 2", 10) pour supporter le poids de la semi-remorque.

3. Véhicule tracteur selon la revendication 1 ou 2, **caractérisé en ce que** le bâti porteur (5) comporte des moyens pour l'opération d'accouplement avec la semi-remorque (3).

4. Véhicule tracteur selon une ou plusieurs des revendications 1 à 3, **caractérisé en ce que** le bâti porteur (5) comporte des moyens (6) pour empêcher un déplacement latéral par rapport au véhicule tracteur (1).

5. Véhicule tracteur selon une ou plusieurs des revendications 1 à 4, **caractérisé en ce que** le bâti porteur (5) comporte une sellette d'attelage (4) portant la semi-remorque (3), le bâti (5) pouvant être accroché à des bras inférieurs et supérieurs (2', 2") d' un système hydraulique trois points (2) supportant le poids de la semi-remorque.

6. Véhicule tracteur selon une ou plusieurs des revendications 1 à 5, **caractérisé en ce qu'**au moins un train de roues supplémentaire (16) est associé à l'extrémité du bâti porteur (5, 12) située côté semi-remorque.
